# EUROPÄISCHE PATENTSCHRIFT

(11) **EP 3 956 167 B1**
(45) Veröffentlichungstag und Bekanntmachung des Hinweises auf die Patenterteilung: **04.09.2024**
(21) Anmeldenummer: 20720368.8
(22) Anmeldetag: 06.04.2020
(51) Int. Cl.: B60K 37/00

(54) **VERFAHREN ZUM DURCHFÜHREN EINER KORREKTUR DER FAHRTRICHTUNG DURCH EIN FAHRERASSISTENZSYSTEM IN EINEM KRAFTFAHRZEUG SOWIE EINE STEUERVORRICHTUNG HIERZU**
METHOD FOR CARRYING OUT A CORRECTION OF THE DIRECTION OF TRAVEL BY A DRIVER ASSISTANCE SYSTEM IN A MOTOR VEHICLE, AND A CONTROL DEVICE THEREFOR
PROCÉDÉ D'EXÉCUTION D'UNE CORRECTION DE LA DIRECTION DE DÉPLACEMENT PAR UN SYSTÈME D'AIDE À LA CONDUITE DANS UN VÉHICULE À MOTEUR AINSI QUE DISPOSITIF DE COMMANDE À CET EFFET

(30) Priorität: 29.05.2019 DE 102019207951
(43) Veröffentlichungstag der Anmeldung: 23.02.2022
(73) Patentinhaber: Volkswagen Aktiengesellschaft, 38440 Wolfsburg (DE)
(72) Erfinder: WYSZKA, Robert Jan, 30165 Hannover (DE); MORALES FERNÁNDEZ, Daniel, 38114 Braunschweig (DE); HAAR, Adrian, 30173 Hannover (DE); WITTKÄMPER, Michael, 38106 Braunschweig (DE); KODALLE, Pia, 49076 Osnabrück (DE)
(86) Internationale Anmeldenummer: PCT/EP2020/059797
(87) Internationale Veröffentlichungsnummer: WO 2020/239303

(56) Entgegenhaltungen:
- DE-A1- 102013 016 242
- US-A1- 2015 352 954
- US-A1- 2017 136 878

## Beschreibung

Die Erfindung betrifft ein Verfahren zum Durchführen einer Korrektur einer Fahrtrichtung durch ein Fahrerassistenzsystem in einem Kraftfahrzeug. Ferner betrifft die Erfindung eine Steuervorrichtung hierzu.

Ein Fahrerassistenzsystem in einem Kraftfahrzeug ist dazu ausgelegt, eine Steuerung des Kraftfahrzeugs beim Fahren, wenn das Kraftfahrzeug rollt, zu unterstützen. Das Fahrerassistenzsystem umfasst hierzu beispielsweise einen Spurhalteassistenten, ein sogenannter Lane Assist (LA), um das Kraftfahrzeug in Abhängigkeit von einem Verlauf zumindest einer Fahrspur zu lenken, die anhand von erfassten Umgebungsmerkmalen identifiziert wird. In diesem Zusammenhang kann mittels einer Ausgabeeinrichtung, insbesondere einer Ausgabeeinrichtung basierend auf einer erweiterten Realität (Augmented Reality oder AR), und/oder einer Anzeige in einer Sichtlinie eines Fahrers des Kraftfahrzeugs, beispielsweise eines Kopf-oben-Bildschirms (Head-up-Display oder HUD), eine Information des Fahrerassistenzsystems angezeigt, das heißt ausgegeben werden, um die augenblickliche Aktivität des Fahrerassistenzsystems zu signalisieren.

Die US 9 987 926 B2 offenbart ein Steuerverfahren einer elektronischen Vorrichtung zur Anzeige einer fahrbezogenen Führung eines Fahrzeugs, insbesondere eine Führung bei einem Spurverlassen (Lane Departure Guide) oder einem Spurwechsel (Lane Change Guide). Um die Führung zu unterstützen, wird ein Indikator unter Verwendung einer erzeugten Informationen, wie eine Fahrspurinformation, ermittelt und durch Überlappen des ermittelten Indikators auf einem bestimmten Bereich eines Straßenführungsbildschirms angezeigt. Mittels des angezeigten Indikators kann beispielsweise ein durchzuführender Spurwechsel oder ein Abweichen von einer Fahrspur dargestellt werden.

Die US 10 181 266 B2 erläutert ein System zum Bereitstellen einer Fahrunterstützung eines Fahrzeugs, mit einer elektronischen Steuereinheit zum Steuern einer Bildgebungsvorrichtung, beispielsweise ein Augmented-Reality-Head-up-Display (AR-HUD). Basierend auf einer oder mehreren erfassten Aktionen des Fahrzeugs, beispielsweise einem Spurwechsel zum Überholen oder einer Lenkwinkeländerung zum Abbiegen, und auf einer oder mehreren Straßenoberflächeneigenschaften, beispielsweise einer Fahrspurmarkierung, wird die Bildgebungsvorrichtung aktiviert oder deaktiviert. Mittels der Bildgebungsvorrichtung können einem das Fahrzeug steuernden Fahrer, insbesondere bei einer Kurvenfahrt mit Sichteinschränkung, Informationen über aktuelle Verkehrsverhältnisse bereitgestellt werden.

Ferner beschreiben die WO 2017/162278 A1 und die US 2015/0204687 A1 jeweils ein Verfahren zur Unterstützung eines Spurwechsels, wobei mittels eines Augmented-Reality-Geräts Spurwechselinformationen angezeigt werden.

Nachteilig an den oben genannten Verfahren ist, dass das Fahrverhalten weiterhin durch einen Eingriff des Fahrers des Kraftfahrzeugs, insbesondere eine Korrektur der Lenkung zum Spurhalten beziehungsweise Spurwechsel, als Reaktion auf eine vom Fahrerassistenzsystem dem Fahrer mittels einer Ausgabeeinrichtung ausgegebenen Information korrigiert werden muss.

Die US 2019/0031027 A1 offenbart einen Fahrassistenten, der beispielsweise auch als ein Spurhalteassistent ausgebildet sein und zumindest teilweise automatisiert ein Fahrzeug steuern kann. Zum Erhöhen eines Fahrkomforts kann ein Fahrer einen sogenannten Vertrauensmodus einstellen, wobei bei einem automatisierten Steuern detektierte Hindernisse und Fahrspuren als AR-Information angezeigt werden können.

Die WO 2019/071 212 A1 offenbart einen Fahrassistenten zum Erfassen einer Kurve, wobei diese Kurve anhand visueller Daten ermittelt und deren Parameter bestimmt werden kann. Im Zusammenhang mit einer darauf basierten Spurerkennung kann beispielsweise ein Fahrerassistenzsystem (ADAS) ein Driften aus einer Spur erkennen und ein Warnsignal ausgeben oder ein autonomes Fahrsystem bei einer Bahnplanung einsetzen.

Ferner beschreibt die DE 10 2017 212 367 A1 ein Verfahren zur Anzeige des Verlaufs einer Trajektorie vor einem Fahrzeug in Rasterform. Dieser Verlauf kann virtuell über einer tatsächlichen realen Umgebung dargestellt und beispielsweise zum Realisieren einer HUDbasierten Navigationsanzeige verwendet werden.

Die DE 10 2013 016 242 A1 offenbart ein Verfahren und eine Vorrichtung zur Unterstützung mindestens eines Fahrerassistenzsystems. Dies erfolgt durch eine augmentierte Darstellung mindestens einer Zusatzinformation in mindestens einem Bild einer einem Fahrzeug vorausliegenden Fahrzeugumgebung.

Im Falle eines automatischen Eingriffs besteht die Gefahr, dass ein Fahrer erschrickt und in das automatische Fahrmanöver eingreift und es damit übersteuert oder vereitelt.

Aufgabe der vorliegenden Erfindung ist es, eine Korrektur einer Fahrtrichtung eines Kraftfahrzeugs beim Befahren einer Fahrspur vom Fahrerassistenzsystem besonders nutzerfreundlich durchgeführt wird.

Diese Aufgabe wird durch die Gegenstände der unabhängigen Patentansprüche gelöst. Vorteilhafte Ausgestaltungen mit zweckmäßigen und nicht trivialen Weiterbildungen der Erfindung sind in den abhängigen Ansprüchen, der folgenden Beschreibung und den Figuren angegeben.

Das erfindungsgemäße Verfahren zum Durchführen einer Korrektur einer Fahrtrichtung durch ein Fahrerassistenzsystem in einem Kraftfahrzeug wird unabhängig von einer Aktion eines das Kraftfahrzeug lenkenden Fahrzeuginsassen von einer Steuervorrichtung des Fahrerassistenzsystems durchgeführt, während das Kraftfahrzeug in einer Fahrtrichtung innerhalb einer aktuell befahrenen Fahrspur fährt. Wird ein Bedarf an der Korrektur der Fahrtrichtung zum weiteren Betreiben des Kraftfahrzeugs innerhalb der aktuell befahrenen Fahrspur erkannt, dann wird zumindest ein Anzeigesymbol mittels einer Ausgabeeinrichtung des Kraftfahrzeugs ausgegeben, wobei das zumindest eine Anzeigesymbol die durchzuführende Korrektur der Fahrtrichtung anzeigt. Erst anschließend wird die mittels des zumindest einen Anzeigesymbols angezeigten Korrektur der Fahrtrichtung durchgeführt, wobei eine Lenkung des Kraftfahrzeugs angesteuert und das zumindest eine Anzeigesymbol dabei weiterhin ausgegeben wird. Das bedeutet, dass mittels der Steuervorrichtung des Fahrerassistenzsystems aktiv die Lenkung des Kraftfahrzeugs beeinflusst, das heißt angesteuert wird. Ein Eingriff des Fahrerassistenzsystems erfolgt, falls erkannt wird, dass in die Lenkung des Kraftfahrzeugs eingegriffen werden soll, damit das Kraftfahrzeug weiterhin innerhalb der Fahrspur fährt, das heißt rollt. Dabei wird bereits vor dem Durchführen der Korrektur der Fahrtrichtung mittels des zumindest einen Anzeigesymbols, beispielsweise eines optischen Grafikelements, der Eingriff des Fahrerassistenzsystems in eine Steuerung oder Querführung des Kraftfahrzeugs zeitlich vorab ausgegeben, das heißt angezeigt. Das zumindest eine Anzeigesymbol wird mittels der Ausgabeeinrichtung, beispielsweise eines Bildschirms, einem Fahrzeuginsassen, insbesondere dem das Kraftfahrzeug lenkenden Fahrzeuginsassen, sichtbar dargestellt. Der darauffolgende Eingriff des Fahrerassistenzsystems wird ohne ein aktives Zutun des das Kraftfahrzeug lenkenden Fahrzeuginsassen durchgeführt, wobei der Fahrzeuginsasse über das Durchführen der Korrektur der Fahrtrichtung des Kraftfahrzeugs aber mittels des angezeigten zumindest einen Anzeigesymbols vorab, das heißt bevor der Eingriff erfolgt, und währenddessen, das heißt beim Durchführen der Korrektur der Fahrtrichtung, informiert wird. Beispielsweise kann das Verfahren in einer Fahrsituation durchgeführt werden, wenn das Kraftfahrzeug innerhalb der Fahrspur fährt und sich dabei langsam, das heißt für den Fahrzeuginsassen nicht unmittelbar wahrnehmbar, einer Begrenzung der Fahrspur nähert. Dabei wird durch das Fahrerassistenzsystem beispielsweise mittels einer Kamera erkannt, dass die Korrektur der Fahrtrichtung erforderlich ist, damit das Kraftfahrzeug weiterhin innerhalb der Fahrspur betrieben wird und die Begrenzungen der Fahrspur nicht überfährt. Um den Fahrzeuginsassen auf die mittels des Fahrerassistenzsystems durchzuführende, also bevorstehende Korrektur der Fahrtrichtung aufmerksam zu machen, wird mittels des zumindest einen Anzeigesymbols der zeitlich zu einem späteren Zeitpunkt durchgeführten Eingriff dargestellt. Anschließend führt die Steuervorrichtung die Korrektur der Fahrtrichtung mittels Ansteuern der Lenkung des Kraftfahrzeugs durch. Das mittels der Anzeigevorrichtung angezeigte zumindest eine Anzeigesymbol wird während des Durchführens der Korrektur weiterhin ausgegeben.

Vorteilhaft ist, dass die Korrektur der Fahrtrichtung unabhängig von einer Aktion, das heißt einem Handeln des Fahrzeuginsassen, beispielsweise einem Betätigen eines Lenkrades des Kraftfahrzeugs durch den das Kraftfahrzeug lenkenden Fahrzeuginsassen, ist und vom Fahrerassistenzsystem bei Bedarf veranlasst und durchgeführt wird. Der vorab informierte Fahrzeuginsasse kann sich somit auf den Eingriff des Fahrerassistenzsystems vorbereiten beziehungsweise den Eingriff des Fahrerassistenzsystems leicht nachvollziehen, da er über die Korrektur der Fahrtrichtung vorab in Kenntnis gesetzt wird. Somit kann verhindert werden, dass vom Fahrzeuginsassen in Reaktion auf die mittels des Fahrerassistenzsystems durchgeführte Korrektur der Fahrtrichtung eine gegensteuernde Maßnahme, beispielsweise das ruckartige Betätigen des Lenkrades in eine entgegengesetzte Richtung, eingeleitet wird. Des Weiteren wird eine Wahrscheinlichkeit reduziert, dass der Fahrzeuginsasse mittels Betätigen des Lenkrads die vom Fahrerassistenzsystem durchgeführte Korrektur unabsichtlich verstärkt, da dem Fahrzeuginsassen der Eingriff Fahrerassistenzsystem nicht bewusst war. Dadurch dass der Fahrzeuginsasse hinsichtlich des Eingriffs des Fahrerassistenzsystems informiert ist, kann eine Sicherheit beim Betreiben des Kraftfahrzeugs erhöht werden.

Der Erfindung liegt die Erkenntnis zugrunde, dass ein Verhalten des Fahrerassistenzsystems dem Fahrzeuginsassen mittels des Ausgebens des zumindest einen Anzeigesymbols dargestellt und somit ein Verständnis des Fahrzeuginsassen für den Eingriff des Fahrerassistenzsystems erzielt wird. Des Weiteren kann dem Fahrzeuginsassen eine die Korrektur der Fahrtrichtung charakterisierende Information zur richtigen Zeit, das heißt vorbereitend zur und während die Korrektur der Fahrtrichtung durchgeführt wird, ausgegeben werden.

Eine Ausführungsform sieht vor, dass die Ausgabeeinrichtung einen Bildschirm zur erweiterten Realitätsanzeige, einer sogenannten Augmented-Reality (AR), umfasst. Mittels des Bildschirms wird einem Fahrzeuginsassen die durchzuführende und/oder durchgeführte Korrektur der Fahrtrichtung ausgegeben, indem das zumindest eine Anzeigesymbol der Fahrzeugumgebung zumindest teilweise überlagert wird. Bei dem Bildschirm handelt es sich insbesondere um einen in einem Sichtbereich des das Kraftfahrzeug lenkenden Fahrzeuginsassen angeordneten Kopf-oben-Bildschirm, ein sogenanntes Head-up-Display (HUD). Das bedeutet, dass die Fahrzeugumgebung durch das teilweise transparent ausgebildete zumindest einer Anzeigesymbol durch sichtbar ist. Somit kann der Fahrzeuginsasse die Fahrzeugumgebung erfassen, ohne dass von dem zumindest einen Anzeigesymbol ein Teilbereich der Fahrzeugumgebung vollständig verdeckt wird. Beispielsweise wird mittels des zumindest einen Anzeigesymbols eine Begrenzung der Fahrspur angezeigt, wobei dennoch eine vom zumindest einen Anzeigesymbol überdeckte, das heißt überlagerte Oberfläche der Fahrspur sichtbar ist. Dadurch kann ein Informationsgehalt für den Fahrzeuginsassen erhöht werden, da sowohl die Fahrzeugumgebung als auch das zumindest eine die Korrektur der Fahrtrichtung charakterisierende Anzeigesymbol dargestellt werden.

Eine weitere Ausführungsform hierzu sieht vor, dass die Ausgabeeinrichtung ein an einem Lenkrad des Kraftfahrzeugs angeordnetes Vibrationselement zur Ausgabe eines haptischen Signals umfasst. Mittels des Vibrationselements wird dem das Kraftfahrzeug lenkenden Fahrzeuginsassen die durchzuführende und/oder durchgeführte Korrektur der Fahrtrichtung zumindest teilweise zeitgleich mit dem zumindest einen angezeigten Anzeigesymbol ausgegeben. Somit wird die optisch mittels des zumindest einen Anzeigesymbols angezeigte Korrektur der Fahrtrichtung dem Fahrzeuginsassen zumindest teilweise mittels des haptischen Signals untermalt, das heißt durch dieses verstärkt. Alternativ oder zusätzlich kann vorgesehen sein, dass das zumindest eine Anzeigesymbol und das haptische Signal synchron ausgegeben werden. Ist beispielsweise das zumindest eine angezeigte Anzeigesymbol ähnlich zur Fahrzeugumgebung ausgebildet und weist insbesondere eine Farbähnlichkeit auf, dann kann es vom Fahrzeuginsassen nur erschwert wahrgenommen werden. Das heißt der Fahrzeuginsasse kann Schwierigkeiten haben, das zumindest eine Anzeigesymbol von der Fahrzeugumgebung zu unterscheiden. Mittels des haptischen Signals kann die durchzuführende und/oder durchgeführte Korrektur der Fahrtrichtung auch wahrgenommen werden, falls der Fahrzeuginsasse das zumindest eine Anzeigesymbol nicht erkennt oder übersieht.

Eine weitere Ausführungsform sieht vor, dass das zumindest eine Anzeigesymbol fluchtperspektivisch und innerhalb von zwei Begrenzungen der aktuell befahrenen Fahrspur in Fahrtrichtung angeordnet ist, und/oder eine der zwei Begrenzungen der Fahrspur grafisch anzeigt. Das bedeutet, dass eine Fahrzeugumgebung des Kraftfahrzeugs außerhalb der Fahrspur uneingeschränkt, das heißt vollständig, erfasst werden kann und dass das zumindest eine Anzeigesymbol lediglich innerhalb der die Fahrspur nach außen hin abschließenden Begrenzungen angeordnet wird. Beispielsweise handelt es sich bei den Begrenzungen der Fahrspur um eine Spurmarkierung und/oder eine physische Begrenzung, wie eine Bordsteinkante. Wird das Kraftfahrzeug innerhalb der Fahrspur betrieben, dann wird mittels der fluchtperspektivischen Anzeige ein Verlauf der Fahrspur dem Fahrzeuginsassen angezeigt. Somit kann das zumindest eine Anzeigesymbol intuitiv mit der Fahrzeugumgebung verknüpft werden. Des Weiteren kann mittels der vollständig sichtbaren Begrenzungen die Fahrspur nach außen begrenzt wahrgenommen werden, auch wenn mittels des zumindest einen Anzeigesymbols die Korrektur der Fahrtrichtung ausgegeben wird.

Eine weitere Ausführungsform hierzu sieht vor, dass das zumindest eine Anzeigesymbol zumindest ein dynamisches Anzeigesymbol umfasst, mittels welchem die Korrektur der Fahrtrichtung zeitlich veränderlich angezeigt wird. Das bedeutet, dass das zumindest eine dynamische Anzeigesymbol variiert. Bei dem zumindest einen dynamischen Anzeigesymbol handelt es sich beispielsweise um ein parallel zu einer den Begrenzungen der Fahrspur angeordnetes dynamisches Grafikelement, mittels welchem die Korrektur der Fahrtrichtung schematisch angezeigt wird. Somit kann insbesondere ein zeitlicher Verlauf und/oder ein Ausmaß der Korrektur der Fahrtrichtung optisch ausgegeben werden. Dadurch kann dem Fahrzeuginsassen beispielsweise angezeigt werden, ob mit dem Durchführen der Korrektur gerade erst begonnen oder diese zu einem Großteil bereits abgeschlossen wurde. Des Weiteren kann angezeigt werden, ob die Korrektur der Fahrtrichtung größer oder kleiner gleich einem vorgegebenen Korrekturfaktor, beispielsweise einem Lenkwinkel, ist. Vorteilhaft ist, dass der Fahrzeuginsasse mittels des zumindest einen dynamischen Anzeigesymbols besonders einfach die Korrektur der Fahrtrichtung erkennen und den Eingriff des Fahrerassistenzsystems für sich einordnen kann.

Eine weitere Ausführungsform sieht vor, dass das zumindest eine Anzeigesymbol zumindest ein statisches Anzeigesymbol umfasst, mittels welchem zumindest eine der zwei Begrenzungen der Fahrspur zeitlich konstant angezeigt wird, wobei das zumindest eine dynamische Anzeigesymbol an einer der beiden Begrenzungen und unmittelbar an dem zumindest einen statischen Anzeigesymbol angeordnet wird, um optisch mit dem zumindest einen statischen Anzeigesymbol einen gemeinsamen Ausgabebereich zu bilden. Somit ist die Ausgabe der beiden Anzeigesymbole örtlich miteinander verknüpft. Das bedeutet, dass das zumindest eine dynamische Anzeigesymbol und das zumindest eine statischen Anzeigesymbol von dem Fahrzeuginsassen als eine gemeinsame Einheit bilden. Dabei wird ein vom zumindest einen dynamischen Anzeigesymbol umfasster Teilbereich des Ausgabebereichs variabel, das heißt veränderlich, und ein vom zumindest einen statischen Anzeigesymbol umfasster Teilbereich des Ausgabebereichs stetig, das heißt zeitlich unveränderlich, wahrgenommen. Bei dem zumindest einen statischen Anzeigesymbol handelt es sich beispielsweise um ein parallel zu einer den Begrenzungen der Fahrspur unmittelbar an dem zumindest einen dynamischen Grafikelement angeordnetes statisches Grafikelement, mittels welchem zumindest eine der Begrenzungen schematisch angezeigt wird. Vorteilhaft ist, dass mittels des zumindest einen statischen Anzeigesymbols permanent eine Geometrie der Fahrspur, insbesondere im Verhältnis zu weiteren Fahrspuren, angezeigt wird.

Eine weitere Ausführungsform sieht vor, dass das Ausgeben des zumindest einen Anzeigesymbols mehrere, zeitlich aufeinanderfolgende Ausgabephasen umfasst. In Abhängigkeit von der jeweiligen Ausgabephase wird zumindest ein Ausgabeparameter des zumindest einen Anzeigesymbols verändert, wobei der zumindest eine Ausgabeparameter eine Ausgabeintensität und/oder eine Ausgabefarbe und/oder eine Ausgabedauer umfasst. Das bedeutet, dass das Ausgeben des zumindest einen Anzeigesymbols in mehreren Schritten, das heißt mehreren Ausgabephasen, erfolgt. In der jeweiligen Ausgabephase wird der zumindest eine Ausgabeparameter des Anzeigesymbols variiert, beispielsweise erhöht oder erniedrigt, um eine Ausprägung und/oder eine Charakteristik des zumindest einen Anzeigesymbols vorzugegeben. Beispielsweise wird zu Beginn des Durchführens der Korrektur der Fahrtrichtung dem Fahrzeuginsassen das zumindest eine Anzeigesymbol besonders auffällig ausgegeben. Die Ausgabeintensität des zumindest einen Anzeigesymbols ist hoch, die Ausgabefarbe umfasst eine grelle Signalfarbe und die Ausgabedauer ist lang. Wurde die Korrektur der Fahrtrichtung bereits zu einem Großteil durchgeführt, dann ist die Ausgabeintensität gering, umfasst die Ausgabefarbe eine gedämpfte Signalfarbe und die Ausgabedauer ist kurz. Alternativ oder zusätzlich kann vorgesehen sein, dass vor dem Durchführen der Korrektur der Fahrtrichtung dem Fahrzeuginsassen das zumindest eine Anzeigesymbol weniger auffällig als beim Durchführen der Korrektur ausgegeben wird, um den Fahrzeuginsassen auf den durchzuführenden Eingriff vorzubereiten und ihn nicht zu erschrecken. Somit kann der Fahrzeuginsasse eine Einschätzung vornehmen, ob und in welchem Ausmaß die Korrektur der Fahrtrichtung vom Fahrerassistenzsystem durchzuführen ist und/oder durchgeführt wird.

Eine weitere Ausführungsform hierzu sieht vor, dass in einer ersten Ausgabephase der mehreren Ausgabephasen zumindest ein erstes Anzeigesymbol und in einer auf die erste Ausgabephase folgenden zweiten Ausgabephase zumindest ein zweites Anzeigesymbol ausgegeben wird, wobei eine erste Ausgabeintensität des ersten Anzeigesymbols größer ist als eine zweite Ausgabeintensität des zweiten Anzeigesymbols. Das bedeutet, dass eine jeweilige Ausgabeintensität mit einem zeitlichen Verlauf der durchgeführten Korrektur der Fahrtrichtung verringert wird. Beispielsweise kann das zumindest erste Anzeigesymbol, das zu Beginn der Korrektur ausgegeben wird und dessen Ausgabeintensität vergleichsweise zur Ausgabeintensität des zumindest einen zweiten Anzeigesymbols hoch ist, dem Fahrzeuginsassen den Eingriff des Fahrerassistenzsystems in die Lenkung deutlich anzeigen. Zu diesem Zeitpunkt ist es vorteilhaft, wenn das zumindest erste Anzeigesymbol dem Fahrzeuginsassen besonders deutlich ausgegeben und dieser dadurch sensibilisiert wird. Wird hingegen die Korrektur der Fahrtrichtung bereits durchgeführt, dann informiert das zumindest zweite Anzeigesymbol, dessen Ausgabeintensität vergleichsweise gering ist, den bereits mittels des zumindest ersten Anzeigesymbols sensibilisierten Fahrzeuginsassen. Alternativ oder zusätzlich kann vorgesehen sein, dass in einer der ersten Ausgabephase zeitlich vorangegangenen Ausgabephase, einer sogenannten einleitenden Ausgabephase, zumindest ein weiteres Anzeigesymbol ausgegeben wird, dessen Ausgabeintensität geringer als die erste Ausgabeintensität ist, um den Fahrzeuginsassen auf das Ausgeben des zumindest einen ersten Anzeigesymbols vorzubereiten.

Es ist ferner vorgesehen, dass eine Relativposition des Kraftfahrzeugs in Bezug auf die aktuell befahrene Fahrspur erfasst wird. Anhand der erfassten Relativposition des Kraftfahrzeugs wird ein Abstand des Kraftfahrzeugs zu zumindest einer der beiden Begrenzungen der aktuell befahrenen Fahrspur ermittelt. Falls der ermittelte Abstand geringer als ein Mindestabstand ist, wird der Bedarf zum Durchführen der Korrektur der Fahrtrichtung erkannt. Die Relativposition des Kraftfahrzeugs und die aktuell befahrene Fahrspur, insbesondere zumindest einer der Begrenzungen, werden beispielsweise mittels einer Sensoreinrichtung des Kraftfahrzeugs (beispielsweise eine Kamera) und/oder mittelseines globalen Navigationssatellitensystems des Kraftfahrzeugs und/oder von einer mittels einer Kommunikationsverbindung mit dem Kraftfahrzeug verbundenen externen Einrichtung, wie einem Server und/oder zumindest einem weiteren Fahrzeug und/oder einer Messstation am Straßenrand, ermittelt, das heißt bestimmt. Mittels einer Auswerteeinrichtung des Kraftfahrzeugs wird anhand der erfassten Relativposition des Kraftfahrzeugs und der zumindest einen der beiden erfassten Begrenzungen der Fahrspur ermittelt, ob der vorgegebene, insbesondere der in einer Speichereinrichtung der Steuervorrichtung hinterlegte Mindestabstand zwischen dem Kraftfahrzeug und der zumindest einen Begrenzung unterschritten wird. Falls der Mindestabstand unterschritten wird, dann kann vom Fahrerassistenzsystem die Korrektur der Fahrtrichtung mittels des Ansteuerns der Lenkung des Kraftfahrzeugs eingeleitet und durchgeführt werden. Vorteilhaft ist, dass der Bedarf zur Korrektur vom Fahrerassistenzsystem basierend auf der erfassten Relativposition in Bezug zur Fahrspur und nicht auf einer möglicherweise unzureichenden oder fehlerhaften Einschätzung durch den Fahrzeuginsassen ermittelt wird. Somit kann eine Sicherheit des Fahrzeuginsassen und/oder weiterer Verkehrsteilnehmers erhöht werden.

Eine erfindungsgemäße Steuervorrichtung für ein Fahrerassistenzsystem eines Kraftfahrzeugs weist eine Prozessoreinrichtung auf, die dazu eingerichtet ist, ein Verfahren zum Durchführen einer Korrektur einer Fahrtrichtung durch das Fahrerassistenzsystem durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung einen Programmcode aufweisen, der dazu eingerichtet ist, bei Ausführen durch die Prozessoreinrichtung das erfindungsgemäßen Verfahrens durchzuführen. Der Programmcode kann in einem Datenspeicher der Prozessoreinrichtung gespeichert sein.

Der Erfindung gehören auch Weiterbildungen der erfindungsgemäßen Steuervorrichtung des Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Steuervorrichtung hier nicht noch einmal beschrieben.

Im Folgenden ist ein Ausführungsbeispiel der Erfindung beschrieben. Hierzu zeigt:
- Fig. 1: einen schematischen Ablauf eines Verfahrens zum Durchführen einer Korrektur einer Fahrtrichtung in einem Kraftfahrzeug durch ein Fahrerassistenzsystem; und
- Fig. 2: eine Skizze einer Ansicht in Fahrtrichtung mit Blickrichtung aus einem Innenraum des Kraftfahrzeugs.

Bei dem im Folgenden erläuterten Ausführungsbeispiel handelt es sich um eine bevorzugte Ausführungsform der Erfindung.

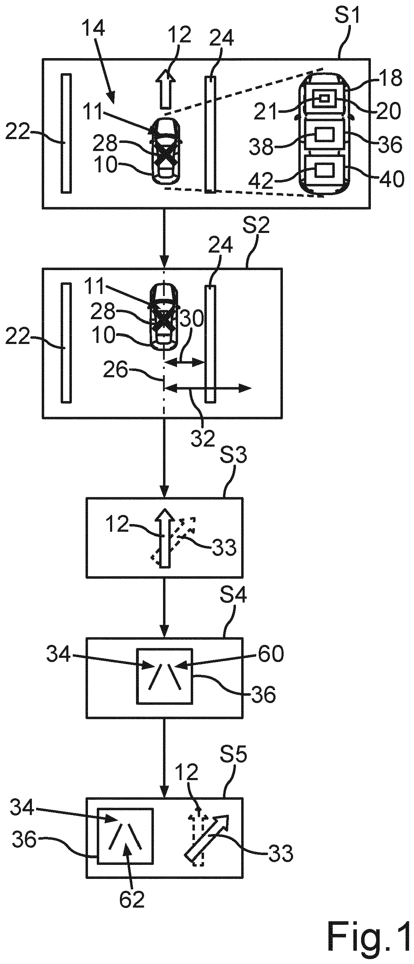

In den Figuren sind funktionsgleiche Elemente jeweils mit denselben Bezugszeichen versehen. Fig. 1 zeigt einen schematischen Ablauf eines Verfahrens, das mehrere Verfahrensschritte S1 bis S5 umfasst. In einem ersten, vorbereitenden Verfahrensschritt S1 fährt ein Kraftfahrzeug 10 mit einem Fahrzeuginsassen 11, insbesondere dem das Kraftfahrzeug 10 lenkenden Fahrzeuginsassen 11, in einer Fahrtrichtung 12 innerhalb einer aktuell befahrenen Fahrspur 14 einer Fahrzeugumgebung 16. Das Kraftfahrzeug 10 umfasst ein Fahrerassistenzsystem 18, wobei eine Steuereinrichtung 20 des Fahrerassistenzsystems 18 jeweilige Verfahrensschritte S1 bis S5 mittels einer Prozessoreinrichtung 21 der Steuereinrichtung 20 durchführt, wobei zum Durchführen einer Korrektur der Fahrtrichtung 12 eine Lenkung das Kraftfahrzeugs 10 angesteuert wird. Die Fahrspur 14 wird von zwei Begrenzungen 22, 24 nach außen begrenzt, die als Spurmarkierungen ausgebildet sind. Bei einem optimalen Betreiben des Kraftfahrzeugs 10 innerhalb der aktuell befahrenen Fahrspur 14 verläuft eine Längsachse 26 des Kraftfahrzeugs 10 im Wesentlichen parallel zu den beiden Begrenzungen 22, 24. Um eine schematisch mit einem Kreuz angedeutete Relativposition 28 des Kraftfahrzeugs 10 in Bezug auf die aktuelle Fahrspur 14, insbesondere deren Begrenzung 22, 24, zu erfassen, weist das Kraftfahrzeug 10 eine Sensoreinrichtung, wie eine Kamera oder ein Geschwindigkeitsmesser, und ein globales Navigationssatellitensystem auf. Anhand der erfassten Relativposition 28 des Kraftfahrzeugs 10 wird in einem zweiten Verfahrensschritt S2 ein Abstand 30 des Kraftfahrzeugs 10 zu zumindest einer der beiden Begrenzungen 22, 24 mittels der Prozessoreinrichtung 21 ermittelt. Falls der ermittelte Abstand 30 des Kraftfahrzeugs 10 geringer als ein hinterlegter Mindestabstand 32 ist, wird in einem dritten Verfahrensschritt S3 ein Bedarf zum Durchführen der Korrektur der Fahrtrichtung 12 erkannt, um das Kraftfahrzeug 10 weiter innerhalb der aktuell befahrenen Fahrspur 14 zu betreiben. Bei der Korrektur der Fahrtrichtung 12 mittels Ansteuern der Lenkung des Kraftfahrzeugs 10 soll die Fahrtrichtung 12 in eine korrigierte Fahrtrichtung 33 überführt, das heißt eingestellt werden. In einem vierten Verfahrensschritt S4 wird zumindest ein Anzeigesymbol 34 mittels einer Ausgabeeinrichtung 36 des Kraftfahrzeugs 10 ausgegeben, wobei das zumindest eine Anzeigesymbol 34 die durchzuführende Korrektur der Fahrtrichtung 12 in die korrigierte Fahrtrichtung 33 anzeigt. Nachfolgend wird in einem fünften Verfahrensschritt S5 die Korrektur der Fahrtrichtung 12 durchgeführt, wobei eine Lenkung des Kraftfahrzeugs 10 mittels der Steuervorrichtung 20 des Fahrerassistenzsystems 18 angesteuert wird. Dabei wird das zumindest eine Anzeigesymbols 34 mittels der Ausgabeeinrichtung 36 zum Ausgeben der durchgeführten Korrektur der Fahrtrichtung 12 angezeigt.

Die Ausgabeeinrichtung 36 umfasst einen Bildschirm 38 zur erweiterten Realitätsanzeige, einer sogenannten Argmented-Reality (AR), des zumindest einen als optisches Grafikelement ausgebildeten Anzeigesymbols 34 und ein an einem Lenkrad 40 des Kraftfahrzeugs 10 angeordnetes Vibrationselement 42 zum Ausgeben eines haptischen Signals. Mittels des ausgegebenen zumindest einen Anzeigesymbols 34, insbesondere in Kombination mit dem zumindest teilweise zeitgleich ausgegebenen haptischen Signal, wird dem Fahrzeuginsassen 11, insbesondere dem das Kraftfahrzeug 10 lenkenden Fahrzeuginsassen 11, die durchzuführende und/oder durchgeführte Korrektur der Fahrtrichtung 12 angezeigt. Beim Ausgeben des zumindest einen Anzeigesymbol 34 wird das zumindest eine teilweise transparent ausgebildete Anzeigesymbol 34 der Fahrzeugumgebung 16 zumindest teilweise überlagert. Bei dem Bildschirm 38 handelt es sich insbesondere um einen in einer Sichtlinie des das Kraftfahrzeug 10 lenkenden Fahrzeuginsassen 11 angeordneten Kopf-oben-Bildschirm, ein sogenanntes Head-up-Display (HUD).

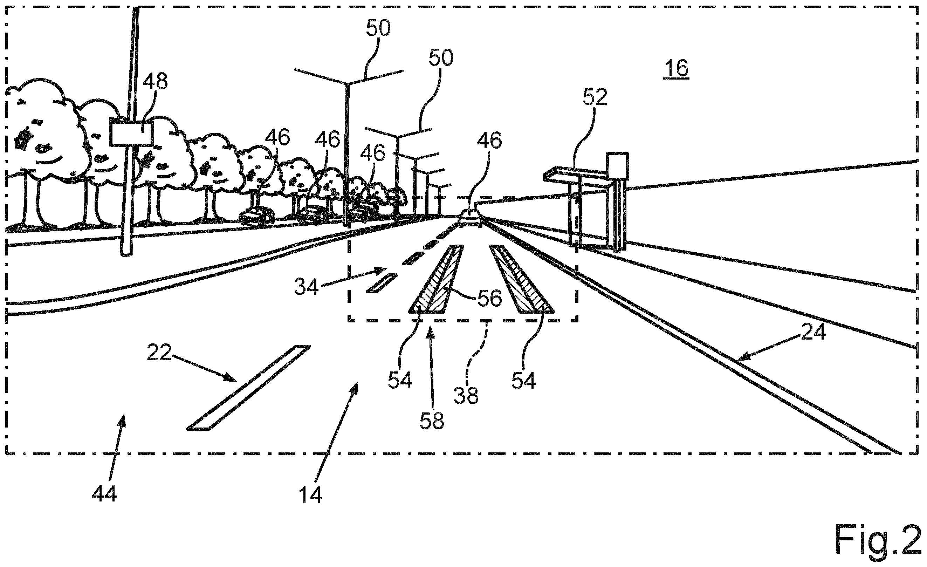

Fig. 2 zeigt in einer fluchtperspektivischen Vorderansicht die zu befahrene Fahrspur 14 mit Blickrichtung aus einem Innenraum des Kraftfahrzeugs 10 in Fahrtrichtung 12 durch eine Frontscheibe des Kraftfahrzeugs 10. Das Kraftfahrzeug 10 wird innerhalb der aktuell befahrenen Fahrspur 14 betrieben, an welcher eine weitere Fahrspur 44 angeordnet ist. Die Fahrspur 14 wird von den beiden Begrenzungen 22, 24 nach außen begrenzt, wobei eine der Begrenzungen 22 als Spurmarkierung und eine der Begrenzungen 24 als Bordsteinkante ausgebildet ist. Des Weiteren werden weitere sich in und entgegengesetzt zur Fahrtrichtung 12 bewegende Verkehrsteilnehmer 46 und Komponenten der Fahrzeugumgebung 16, wie zumindest ein Verkehrsschild 48, Fahrbahnbeleuchtungselemente 50 und eine als Haltestelle ausgebildete Nahverkehrsinfrastruktur 52, gezeigt. In einer Blickrichtung des das Kraftfahrzeug 10 lenkenden Fahrzeuginsassen 11 ist der als Kopf-oben-Bildschirm ausgebildete Bildschirm 38 angeordnet, der das zumindest eine teilweise transparente Anzeigesymbol 34 der Fahrzeugumgebung 16 überlagert ausgibt. Das zumindest eine Anzeigesymbol 34 ist fluchtperspektivisch und innerhalb der beiden Begrenzungen 22, 24 der aktuell befahrenen Fahrspur 14 angeordnet. Dabei umfasst das zumindest eine Anzeigesymbols 34 zumindest ein dynamisches Anzeigesymbol 54 zum zeitveränderlichen Anzeigen der durchzuführende beziehungsweise durchgeführten Korrektur der Fahrspur 14 und zumindest ein statisches Anzeigesymbol 56 zum stetigen, das heißt zeitlich konstanten Anzeigen zumindest einer der beiden Begrenzungen 22, 24 der aktuell befahrenen Fahrspur 14. Das zumindest eine dynamische Anzeigesymbol 54 ist an einer der beiden Begrenzungen 22, 24 und unmittelbar an dem zumindest einen statischen Anzeigesymbol 56 angeordnet, das heißt das zumindest eine dynamische Anzeigesymbol 54 wird zwischen der einen der beiden Begrenzungen 22, 24 und dem zumindest einen statischen Anzeigesymbol 56 dargestellt. Das zumindest eine dynamische Anzeigesymbol 54 und das zumindest eine statische Anzeigesymbol 56 bilden dabei einen gemeinsamen Ausgabebereich 58.

Das Ausgeben des zumindest einen Anzeigesymbols 34 umfasst mehrere, zeitlich aufeinanderfolgende Ausgabephasen, wobei schematisch in Fig. 1 der vierten Verfahrensschritt S4 eine erste Ausgabephase und der fünfte Verfahrensschritt S5 eine auf die erste Ausgabephase folgende zweite Ausgabephase darstellt. In Abhängigkeit von der jeweiligen Ausgabephase wird zumindest ein Ausgabeparameter, wie eine Ausgabeintensität, eine Ausgabefarbe und/oder eine Ausgabedauer, des zumindest einen Anzeigesymbols 34 verändert. In der ersten Ausgabephase wird zumindest ein erstes Anzeigesymbol 60 und in der zweiten Ausgabephase zumindest ein zweites Anzeigesymbol 62 ausgegeben, wobei eine erste Ausgabeintensität des zumindest einen ersten Anzeigesymbols 60 größer als eine zweite Ausgabeintensität des zumindest einen zweiten Anzeigesymbols 62 ist, um beispielsweise einen zeitlichen Verlauf der Korrektur der Fahrtrichtung 12 differenziert auszugeben und mehrere aufeinanderfolgende grafisch Ausgabephasen darzustellen.

Das Fahrerassistenzsystem 18 ist dazu ausgelegt, das Kraftfahrzeug 10 beim Betreiben innerhalb der aktuell befahrenen Fahrspur 14 zu unterstützen. Beispielsweise wird ein vom Fahrzeuginsassen 11 unbeabsichtigtes Verlassen der Fahrspur 14 mittels der Korrektur der Fahrtrichtung 12 verhindert oder rückgängig gemacht, sodass das Kraftfahrzeug 10 wieder innerhalb der Fahrspur 14 fährt. Derzeit wird lediglich ein Betriebsmodus des Fahrerassistenzsystems 18 dem Fahrzeuginsassen 11 ausgegeben, sodass ein aktiver Betriebsmodus und ein inaktiver Betriebsmodus angezeigt werden. Um den Fahrzeuginsassen 11 über die mittels des Fahrerassistenzsystems 18 durchzuführende und durchgeführte Korrektur der Fahrtrichtung 12 detailliert zu informieren, kann mittels Ausgabe des zumindest einen Anzeigesymbols 34 ein Eingriff des Fahrerassistenzsystems 18 animiert ausgegeben werden. Zusätzlich kann die Ausgabefarbe des zumindest einen Ausgabesymbols 34 entsprechend angepasst werden. Dabei weist das zumindest eine Ausgabesymbol 34 eine geometrische Form auf, die einen Verlauf der Fahrspur 14 und insbesondere deren Begrenzungen 22, 24, beispielsweise in einer Kurve, widerspiegelt, das heißt darstellt. Der informierte Fahrzeuginsasse 11 kann ein Verhalten des Fahrerassistenzsystems 18 auf einfache Art und Weise während einer Fahrt mit dem Kraftfahrzeug 10 nachvollziehen. Insbesondere eine synchronisierte Ausgabe des zumindest einen optischen Anzeigesymbols 34 mittels der Ausgabeeinrichtung 36 gemeinsam mit dem haptischen Signal mittels des am Lenkrad 40 angeordneten Vibrationselements 42 kann die Korrektur der Fahrtrichtung 12 besonders deutlich anzeigen. Somit wird dem Fahrzeuginsassen 11 eine in diesem Zusammenhang relevante Information mittels des zumindest einen Anzeigesymbols 34 zu einem geeigneten Zeitpunkt an einer für ihn geeigneten Ausgabeposition ausgegeben.

Das Fahrzeugassistenzsystem 18 ist insbesondere dazu ausgelegt, beim sogenannten Augmented Driving, das heißt Fahren mit erweiterter Realität, in dem Kraftfahrzeug 10 eingesetzt zu werden, wobei das Kraftfahrzeug 10 eine Autonomiestufe 1 bis 5 aufweisen kann. Weitere Anwendungen umfassen Anzeigeeinrichtungen 36, wie eine Brille mit erweiterter Realität (Augmented Reality Glasses oder AR-Glasses) und einen Kopf-oben-Bildschirm (Head-up-Display oder HUD) von einem mobilen Endgerät oder weiteren Geräten zum Anzeigen der erweiterten Realität. Alternativ oder zusätzlich kann eine virtuelle Realität (Virtual Reality oder VR) und eine gemischte Realität (Mixed Reality oder MR) angezeigt werden. Alternativ oder zusätzlich kann das Fahrzeugassistenzsystem 18 in folgenden vom Kraftfahrzeug 10 abweichenden Fahrzeugen eingesetzt werden: elektrische Straßenfahrzeuge, wie Elektrofahrräder (E-Bike oder Pedelec), Motorroller (Scooter), Elektromotorroller (E-Scooter), Elektrotretroller oder Elektromobile; Flugfahrzeuge, wie Drohnen; Schienenfahrzeuge, wie Züge; und Wasserfahrzeuge, wie Schiffe.

Insgesamt zeigt das Beispiel, wie durch die Erfindung die mittels des AR-Line Assist ausgebildete Fahrerassistenzsystem 18 durchzuführende und/oder durchgeführte Korrektur der Fahrtrichtung 12 dem Fahrzeuginsassen 11 angezeigt wird.

### Bezugszeichenliste

- 10: Kraftfahrzeug
- 11: Fahrzeuginsasse
- 12: Fahrtrichtung
- 14: Fahrspur
- 16: Fahrzeugumgebung
- 18: Fahrerassistenzsystem
- 20: Steuervorrichtung
- 21: Prozessoreinrichtung
- 22: Begrenzung
- 24: Begrenzung
- 26: Längsachse
- 28: Relativposition
- 30: Abstand
- 32: Mindestabstand
- 33: Fahrtrichtung
- 34: Anzeigesymbol
- 36: Anzeigeeinrichtung
- 38: Bildschirm
- 40: Lenkrad
- 42: Vibrationselement
- 44: Fahrspur
- 46: Verkehrsteilnehmer
- 48: Verkehrsschild
- 50: Fahrbahnbeleuchtungselement
- 52: Nahverkehrsinfrastruktur
- 54: Anzeigesymbol
- 56: Anzeigesymbol
- 58: Ausgabebereich
- 60: Anzeigesymbol
- 62: Anzeigesymbol
- S1: Schritt
- S2: Schritt
- S3: Schritt
- S4: Schritt
- S5: Schritt

## Patentansprüche

1. Verfahren zum Durchführen einer Korrektur einer Fahrtrichtung (12) durch ein Fahrerassistenzsystem (18) in einem Kraftfahrzeug (10) unabhängig von einer Aktion eines das Kraftfahrzeug (10) lenkenden Fahrzeuginsassen (11)), wobei das Kraftfahrzeug (10) in der Fahrtrichtung (12) innerhalb einer aktuell befahrenen Fahrspur (14) fährt und eine Steuervorrichtung (20) des Fahrerassistenzsystems (18) folgende Schritte durchführt:
Erfassen einer Relativposition (28) des Kraftfahrzeugs (10) in Bezug auf die aktuell befahrene Fahrspur (14) (S1);
Ermitteln eines Abstands (30) des Kraftfahrzeugs (10) zu zumindest einer von zwei Begrenzungen (22, 24) der aktuell befahrenen Fahrspur (14) anhand der erfassten Relativposition (28) des Kraftfahrzeugs (10) (S2);
Erkennen eines Bedarfs an der Korrektur der Fahrtrichtung (12) zum weiteren Betreiben des Kraftfahrzeugs (10) innerhalb der aktuell befahrenen Fahrspur (14) (S3), falls der ermittelte Abstand (30) geringer als ein Mindestabstand (32) ist;
Ausgeben zumindest eines Anzeigesymbols (34) mittels einer Ausgabeeinrichtung (36) des Kraftfahrzeugs (10), wobei das zumindest eine Anzeigesymbol (34) die durchzuführende Korrektur der Fahrtrichtung (12) vor dem Durchführen der Korrektur der Fahrtrichtung (12) anzeigt (S4); und
Durchführen der mittels des zumindest einen Anzeigesymbols (34) angezeigten Korrektur der Fahrtrichtung (12) ohne ein aktives Zutun des das Kraftfahrzeug (10) lenkenden Fahrzeuginsassen (11), wobei eine Lenkung des Kraftfahrzeugs (10) durch das Fahrerassistenzsystem (18) angesteuert und das zumindest eine Anzeigesymbol (34) dabei ausgegeben wird (S5).

2. Verfahren nach Anspruch 1, wobei die Ausgabeeinrichtung (36) einen Bildschirm (38) zur erweiterten Realitätsanzeige einer Fahrzeugumgebung (16) umfasst, mittels welchem dem Fahrzeuginsassen (11), insbesondere dem das Kraftfahrzeug (10) lenkenden Fahrzeuginsassen (11), die durchzuführende und/oder durchgeführte Korrektur der Fahrtrichtung (12) ausgegeben wird, indem das zumindest eine Anzeigesymbol (34) der Fahrzeugumgebung (16) zumindest teilweise überlagert wird.

3. Verfahren nach Anspruch 2, wobei die Ausgabeeinrichtung (36) ein an einem Lenkrad (40) des Kraftfahrzeugs (10) angeordnetes Vibrationselement (42) zur Ausgabe eines haptischen Signals umfasst, mittels welchem dem das Kraftfahrzeug (10) lenkenden Fahrzeuginsassen (11) die durchzuführende und/oder durchgeführte Korrektur der Fahrtrichtung (12) zumindest teilweise zeitgleich mit dem angezeigten zumindest einen Anzeigesymbols (34) ausgegeben wird.

4. Verfahren nach einem der vorherigen Ansprüche, wobei das zumindest eine Anzeigesymbol (34) fluchtperspektivisch und innerhalb von den zwei Begrenzungen (22, 24) der aktuell befahrenen Fahrspur (14) in Fahrtrichtung (12) angeordnet ist, und die Korrektur und/oder zumindest eine der zwei Begrenzungen (22, 24) der Fahrspur (14) grafisch anzeigt.

5. Verfahren nach Anspruch 4, wobei das zumindest eine Anzeigesymbol (34) zumindest ein dynamisches Anzeigesymbol (54) umfasst, mittels welchem der Korrektur der Fahrtrichtung (12) zeitlich veränderlich angezeigt wird.

6. Verfahren nach Anspruch 5, wobei das zumindest eine Anzeigesymbol (34) zumindest ein statisches Anzeigesymbol (56) umfasst, mittels welchem zumindest eine der zwei Begrenzungen (22, 24) der Fahrspur (14) zeitlich konstant angezeigt wird, wobei das zumindest eine dynamische Anzeigesymbol (54) an einer der beiden Begrenzungen (22, 24) und unmittelbar an dem zumindest einen statischen Anzeigesymbol (56) angeordnet wird, um optisch mit dem zumindest einen statischen Anzeigesymbol (56) einen gemeinsamen Ausgabebereich (58) zu bilden.

7. Verfahren nach einem der vorherigen Ansprüche, wobei das Ausgeben des zumindest einen Anzeigesymbols (34) mehrere, zeitlich aufeinanderfolgende Ausgabephasen umfasst und in Abhängigkeit von der jeweiligen Ausgabephase zumindest ein Ausgabeparameter des zumindest einen Anzeigesymbols (34) verändert wird, wobei der zumindest eine Ausgabeparameter eine Ausgabeintensität und/oder eine Ausgabefarbe und/oder eine Ausgabedauer umfasst.

8. Verfahren nach einem der vorherigen Ansprüche, wobei in einer ersten Ausgabephase der mehreren Ausgabephasen zumindest ein erstes Anzeigesymbol (60) und in einer auf die erste Ausgabephase folgenden zweiten Ausgabephase zumindest ein zweites Anzeigesymbol (62) ausgegeben wird, wobei eine erste Ausgabeintensität des ersten Anzeigesymbols größer ist als eine zweite Ausgabeintensität des zweiten Anzeigesymbols.

9. Steuervorrichtung (20) für ein Fahrerassistenzsystem (18) eines Kraftfahrzeugs (10), wobei die Steuervorrichtung (20) eine Prozessoreinrichtung (21) aufweist, die dazu eingerichtet ist, ein Verfahren nach einem der vorherigen Ansprüche durchzuführen.

## Claims

1. Method for carrying out a correction to a direction of travel (12) by a driver assistance system (18) in a motor vehicle (10) independently of an action of a vehicle occupant (11) steering the motor vehicle (10), wherein the motor vehicle (10) travels in the direction of travel (12) within a currently traveled lane (14) and a control device (20) of the driver assistance system (18) carries out the following steps: detecting a relative position (28) of the motor vehicle (10) in relation to the currently traveled lane (14) (S1);
determining a distance (30) of the motor vehicle (10) to at least one of two boundaries (22, 24) of the currently traveled lane (14) on the basis of the detected relative position (28) of the motor vehicle (10) (S2);
identifying a need to correct the direction of travel (12) for further operation of the motor vehicle (10) within the currently traveled lane (14) (S3) if the determined distance (30) is less than a minimum distance (32);
outputting at least one display symbol (34) by means of an output mechanism (36) of the motor vehicle (10), wherein the at least one display symbol (34) displays the correction to the direction of travel (12) to be carried out before carrying out the correction to the direction of travel (12) (S4); and
carrying out the correction to the direction of travel (12) displayed by means of the at least one display symbol (34) without active intervention by the vehicle occupant (11) steering the motor vehicle (10), wherein a steering of the motor vehicle (10) is controlled by the driver assistance system (18) and the at least one display symbol (34) is output (S5).

2. Method according to claim 1, wherein the output mechanism (36) comprises a screen (38) for an augmented reality display of a vehicle environment (16), by means of which screen the correction to the direction of travel (12) that is to be carried out and/or that is carried out is output to the vehicle occupant (11), in particular to the vehicle occupant (11) steering the motor vehicle (10), by the at least one display symbol (34) of the vehicle environment (16) being at least partially superimposed.

3. Method according to claim 2, wherein the output mechanism (36) comprises a vibration element (42) arranged on a steering wheel (40) of the motor vehicle (10) for outputting a
haptic signal, by means of which vibration element the correction to the direction of travel (12) that is to be carried out and/or that is carried out is output to the vehicle occupant (11) steering the motor vehicle (10) at least partially simultaneously with the displayed at least one display symbol (34).

4. Method according to any of the preceding claims, wherein the at least one display symbol (34) is arranged in the direction of travel (12) in one-point perspective and within the two boundaries (22, 24) of the currently traveled lane (14), and graphically displays the correction and/or at least one of the two boundaries (22, 24) of the lane (14).

5. Method according to claim 4, wherein the at least one display symbol (34) comprises at least one dynamic display symbol (54) by means of which the correction to the direction of travel (12) is displayed in a temporally variable manner.

6. Method according to claim 5, wherein the at least one display symbol (34) comprises at least one static display symbol (56) by means of which at least one of the two boundaries (22, 24) of the lane (14) is displayed in a temporally constant manner, wherein the at least one dynamic display symbol (54) is arranged on one of the two boundaries (22, 24) and directly on the at least one static display symbol (56) in order to visually form a common output region (58) with the at least one static display symbol (56).

7. Method according to any of the preceding claims, wherein the output of the at least one display symbol (34) comprises a plurality of temporally successive output phases and at least one output parameter of the at least one display symbol (34) is changed depending on the relevant output phase, wherein the at least one output parameter has an output intensity and/or an output color and/or an output duration.

8. Method according to any of the preceding claims, wherein at least a first display symbol (60) is output in a first output phase of the plurality of output phases and at least a second display symbol (62) is output in a second output phase following the first output phase, wherein a first output intensity of the first display symbol is greater than a second output intensity of the second display symbol.

9. Control device (20) for a driver assistance system (18) of a motor vehicle (10), wherein the control device (20) has a processor mechanism (21) that is designed to carry out a method according to any of the preceding claims.

## Revendications

1. Procédé pour la réalisation d'une correction d'une direction de déplacement (12) par un système d'assistance au conducteur (18) dans un véhicule automobile (10) indépendamment d'une action d'un passager (11) dirigeant le véhicule automobile (10), dans lequel le véhicule automobile (10) se déplace dans la direction de déplacement (12) à l'intérieur d'une voie de circulation (14) actuellement empruntée et un dispositif de commande (20) du système d'assistance au conducteur (18) réalise les étapes consistant à :
la détection d'une position relative (28) du véhicule automobile (10) par rapport à la voie de circulation (14) actuellement empruntée (S1) ;
la détermination d'une distance (30) du véhicule automobile (10) par rapport à au moins l'une de deux limites (22, 24) de la voie de circulation (14) actuellement empruntée à l'aide de la position relative (28) détectée du véhicule automobile (10) (S2) ;
la détection d'un besoin de correction de la direction de déplacement (12) permettant de continuer à faire fonctionner le véhicule automobile (10) à l'intérieur de la voie de circulation (14) (S3) actuellement empruntée, si la distance (30) déterminée est inférieure à une distance minimale (32) ;
l'émission d'au moins un symbole d'affichage (34) à l'aide d'un dispositif d'émission (36) du véhicule automobile (10), dans lequel l'au moins un symbole d'affichage (34) affiche la correction de la direction de déplacement (12) à réaliser avant de réaliser la correction de la direction de déplacement (12) (S4) ; et
la réalisation de la correction de la direction de déplacement (12) affichée à l'aide de l'au moins un symbole d'affichage (34) sans une intervention active du passager (11) dirigeant le véhicule automobile (10), dans lequel une direction du véhicule automobile (10) est commandée par le système d'assistance au conducteur (18) et l'au moins un symbole d'affichage (34) est alors émis (S5).

2. Procédé selon la revendication 1, dans lequel le dispositif d'émission (36) comprend un écran (38) pour l'affichage en réalité augmentée d'un environnement de véhicule (16), à l'aide duquel la correction de la direction de déplacement (12) à réaliser et/ou réalisée est émise vers le passager (11), en particulier le passager (11) dirigeant le véhicule automobile (10), en superposant au moins partiellement l'au moins un symbole d'affichage (34) de l'environnement de véhicule (16).

3. Procédé selon la revendication 2, dans lequel le dispositif d'émission (36) comprend un élément vibrant (42) disposé sur un volant de direction (40) du véhicule automobile (10) pour l'émission d'un
signal haptique, à l'aide duquel la correction de la direction de déplacement (12) à réaliser et/ou réalisée est émise vers le passager (11) dirigeant le véhicule automobile (10) au moins partiellement en même temps que l'au moins un symbole d'affichage (34) affiché.

4. Procédé selon l'une quelconque des revendications précédentes, dans lequel l'au moins un symbole d'affichage (34) est disposé en perspective d'alignement et à l'intérieur des deux limites (22, 24) de la voie de circulation (14) actuellement empruntée dans la direction de déplacement (12), et affiche graphiquement la correction et/ou au moins une des deux limites (22, 24) de la voie de circulation (14).

5. Procédé selon la revendication 4, dans lequel l'au moins un symbole d'affichage (34) comprend au moins un symbole d'affichage dynamique (54) à l'aide duquel la correction de la direction de déplacement (12) est indiquée de manière variable dans le temps.

6. Procédé selon la revendication 5, dans lequel l'au moins un symbole d'affichage (34) comprend au moins un symbole d'affichage statique (56) à l'aide duquel au moins l'une des deux limites (22, 24) de la voie de circulation (14) est affichée de manière constante dans le temps, dans lequel l'au moins un symbole d'affichage dynamique (54) est disposé au niveau de l'une des deux limites (22, 24) et directement adjacent à l'au moins un symbole d'affichage statique (56) afin de former visuellement une zone de sortie commune (58) avec l'au moins un symbole d'affichage statique (56).

7. Procédé selon l'une quelconque des revendications précédentes, dans lequel l'émission de l'au moins un symbole d'affichage (34) comprend plusieurs phases d'émission qui se succèdent dans le temps et, en fonction de la phase d'émission respective, au moins un paramètre d'émission de l'au moins un symbole d'affichage (34) est modifié, dans lequel l'au moins un paramètre d'émission comprend une intensité d'émission et/ou une couleur d'émission et/ou une durée d'émission.

8. Procédé selon l'une quelconque des revendications précédentes, dans lequel au moins un premier symbole d'affichage (60) est émis dans une première phase d'émission de la pluralité de phases d'émission et au moins un second symbole d'affichage (62) est émis dans une seconde phase d'émission suivant la première phase d'émission, dans lequel une première intensité d'émission du premier symbole d'affichage étant est à une seconde intensité d'émission du second symbole d'affichage.

9. Dispositif de commande (20) pour un système d'assistance au conducteur (18) d'un véhicule automobile (10), dans lequel le dispositif de commande (20) présente un dispositif à processeur (21), qui est conçu pour réaliser un procédé selon l'une quelconque des revendications précédentes.
